(19)

Europäisches
Patentamt
European
Patent Office
Office européen
des brevets

(11) **EP 4 162 784 A1**

(12) **EUROPEAN PATENT APPLICATION**

(43) Date of publication:
**12.04.2023 Bulletin 2023/15**

(21) Application number: **21201468.2**

(22) Date of filing: **07.10.2021**

(51) International Patent Classification (IPC):
**A01C 21/00** (2006.01)  **G06N 20/20** (2019.01)
**G06Q 50/02** (2012.01)

(52) Cooperative Patent Classification (CPC):
**A01C 21/007; G06N 20/20; G06Q 10/063;
G06Q 50/02**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Yara International ASA
0277 Oslo (NO)**

(72) Inventor: **REUSCH, Stefan
48249 Dülmen (DE)**

(74) Representative: **AWA Sweden AB
P.O. Box 11394
404 28 Göteborg (SE)**

(54) **METHOD AND SYSTEM FOR PROVIDING A SITE SPECIFIC FERTILIZER RECOMMENDATION**

(57) System (100) and method for providing a fertilizer recommendation for an agronomic field based on a determination of a crop nutrient status, wherein a baseline value and an in-field variability is determined for the crop nutrient status. The fertilizer recommendation is then adjusted based on said computed baseline and in-field variability of the crop nutrient status.

Fig. 1

EP 4 162 784 A1

**Description**

**TECHNICAL FIELD**

The present disclosure relates to a system and method for providing a site-specific fertilizer recommendation to crops in agricultural fields.

**BACKGROUND**

Determining the appropriate amount of fertilizer a crop needs is one of the most important decisions a farmer will encounter. A deficit in nitrogen will reduce yield, while an excess will produce economic losses and damage the environment. A deficit in other nutrients will lead to crop defects and reduced crop quality. Crops, however, present an in-field variability due to the variance in parameters which influence the growth and development of a crop (water, soil properties) and is therefore cumbersome to establish a location dependent fertilizer recommendation which might suit the whole crop at optimum levels.

Amongst the different methods for estimating crop nitrogen levels in crops, the use of remote imagery generated by satellites or other equivalent unmanned aerial vehicles has gained importance in the actual field due to the readily available solutions from different providers. Remote sensing allows determination of crop nitrogen levels of remote fields without the need of in-field inspection. However, the use of remote imagery entails well-known disadvantages like noise, weather and atmospheric conditions. Moreover, remote methods do not get to assess other parameters dependent of soil varying properties. Hence an integrated solution based on remote sensing which takes further in-field variations into account is intended.

**PRIOR ART**

Known approaches to reduce noise in remote sensing for agricultural purposes aim at the analysis of the received signal and noise identification and masking approaches by means of an iterative model fitting with support vector machines. For example, US2021027429 A1 discloses one of said approaches. However, said approaches require a great computational effort and time. Independently of the goal aimed to with the computation of vegetational indexes, smoothing techniques for noise reduction are as well known from US2021201024 A1, wherein in order to identify a crop based on NDVI processing, previously the vegetation index is de noised by means of Gaussian smoothing and models, which requires the calibration of several model parameters and filters out some dynamics, but may lose some information from the original processed index at the cost of a high computational effort again

**SUMMARY**

It is an object of the current disclosure to establish a method for providing a variable fertilizer recommendation based on a deterministic approach which overcomes the above-mentioned problems while considering in-field variability for a fertilizer recommendation.

According to a first aspect of the present disclosure, this and other objectives are achieved by a computer-implemented method for providing a variable fertilizer recommendation for a crop, the method comprising the steps of determining at least one agricultural field comprising at least one crop; determining a crop nutrient status for the at least one crop in the at least one agricultural field, wherein determining a crop nutrient status for the at least one crop in the at least one agricultural field comprises: determining a baseline value for the crop nutrient status of the at least one agricultural field; determining an in-field variability for the crop nutrient status of the at least one agricultural field; determining the crop nutrient status based on the baseline value and on the in-field variability; determining a variable fertilizer recommendation for the at least one agricultural field based on the determined crop nutrient status.

Following this approach, a precise fertilizer recommendation is achieved which has a true representation of the absolute nitrogen uptake and of the in-field variability.

According to a further embodiment, determining a baseline value for the crop nutrient status comprises receiving remote data, the remote data comprising image data of the at least one agricultural field; generating at least one first vegetation index indicative of a crop nutrition status based on the image data; determining the baseline value based on the vegetation index.

Following this approach, a baseline value is computed by means of remote image data.

According to a further embodiment, determining an in-field variability for the crop nutrient status comprises receiving remote data, the remote data comprising image data indicative of a current crop nutrition status of the at least one agricultural field; generating at least one second vegetation index based on the image data; determining the current in-field variability of the variable fertilizer recommendation based on the vegetation index.

Following this approach, an in-field variability term is computed by means of remote image data.

According to a further embodiment, the at least one vegetation index for determining the baseline value is defined as $SX = f(RXXX(1), RXXX(2), ...RXXX(i), ... ,RXXX(n))$, wherein $RXXX(i)$ for i=1,.....,n represent a plurality of reflectance data related to a given wavelength, comprised in the remote data, and $f$ is a predetermined mathematical relation.

Following this approach, the baseline value is obtained based on a suitable vegetation index.

According to a further embodiment, generating at least one vegetation index based on the image data for determining an in-field variability further comprises determining at least one vegetation index different from the at least one vegetation index used for determining the baseline value of the variable fertilizer recommendation.

Following this approach, the intrinsic instrumental noise of the first vegetation index is avoided for the generation of the in-field variability term.

According to a further embodiment, the at least one vegetation index for determining an in-field variability being different from the at least one vegetation index used for determining the baseline value further comprises defining the at least one vegetation index for determining an in-field variability as $SX' = f'(RXXX(1), RXXX(2), ... RXXX(i'), ... , RXXX(n))$ wherein $f'$ is the same mathematical relation as present for the at least one vegetation index for determining the baseline value, wherein the at least one RXXX(i') included in the at least one vegetation index for determining an in-field variability replaces at least one of the reflectance data included in the at least one vegetation index for determining the baseline value and the at least one $RXXX(i')$ represents reflectance data related to a different wavelength from the at least one reflectance data replaced.

Following this approach, a suitable pair of vegetation indexes are generated for an improved crop nutrient status determination.

According to a further embodiment, $RXXX(i')$ are reflectance values selected amongst bands related to green, red, vegetation red edge and near infrared bands.

Following this approach, the chosen wavelengths for the further vegetation index belong to the light spectrum indicative of agricultural properties.

According to a further embodiment, $RXXX(i')$ is selected by detecting at least one area nearby the determined agricultural field which have a spectrally flat values independently from the given wavelength and selecting the at least one band from the green, red, vegetation red edge and near infrared bands which presents the lowest standard deviation for the detected at least one area.

Following this approach, the channel selected has a lower standard deviation reducing the noise in the further vegetation index.

According to a further embodiment, the variable fertilization recommendation is further adjusted based on field data or local analysis of soil nutrient content, soil organic matter and/or mineralization data.

Following this approach, the remote fertilizer recommendation can be improved with local data and further agronomic parameters.

According to a further embodiment, the method further comprises producing a machine-readable script file baed on the determined variable fertilizer recommendation for an agricultural apparatus to carry out the fertilizer application.

Following this approach, an agricultural apparatus can be automatically configured to carry out the fertilizer recommendation of the present disclosure.

According to a further embodiment, the method further comprises implementing the variable fertilizer recommendation by means of an agricultural apparatus configured to carry out a fertilizer application.

Following this approach, the fertilizer recommendation can be carried out directly.

According to further aspects, a system, a data processing apparatus, a computer-readable storage medium, and a computer program product configured to carry out the above discussed methods are envisaged within the present disclosure.

## BRIEF DESCRIPTION OF THE FIGURES

The accompanying drawings, which are included to provide a further understanding of the present disclosure and are incorporated in and constitute a part of this specification, illustrate embodiments of the disclosure and together with the description serve to explain the principles of the disclosure.

Figure 1 shows an agricultural field according to the field of application of the present disclosure.

Figure 2 shows a schematic representation of a system according to an embodiment of the present disclosure.

Figure 3 shows a representation of vegetation indexes SX (top row) and the combination of SX and SX' (bottom row) for a predetermined field over different crop stages in spring season.

Figure 4 shows a representation of vegetation indexes SX (top row) and the combination of SX and SX' (bottom row) for a predetermined field over different crop stages in fall season.

Figure 5 shows a flowchart of the method according to the main embodiment of the present disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings. Reference will now be made in detail to several embodiments, examples of which are illustrated in the accompanying figures.

## DETAILED DESCRIPTION

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The enumeration of numeric values by means of ranges of figures comprises all values and fractions in these ranges, as well as the cited end points. The term "approximately" as used when referring to a measurable value, such as a parameter, an amount, a time period, and the like, is intended to include variations of +/- 10% or less, preferably +/-5% or less, more preferably +/-1% or less, and still more preferably +/-0.1% or less, of and from the specified value, in so far as the variations apply to the disclosure disclosed herein. It should be understood that the value to which the term "approximately" refers per se has also been disclosed.

Unless defined otherwise, all terms present in the current disclosure, including technical and scientific terms, have the meaning which a person skilled in the art usually gives them. For further guidance, definitions are included to further explain terms which are used in the description of the disclosure.

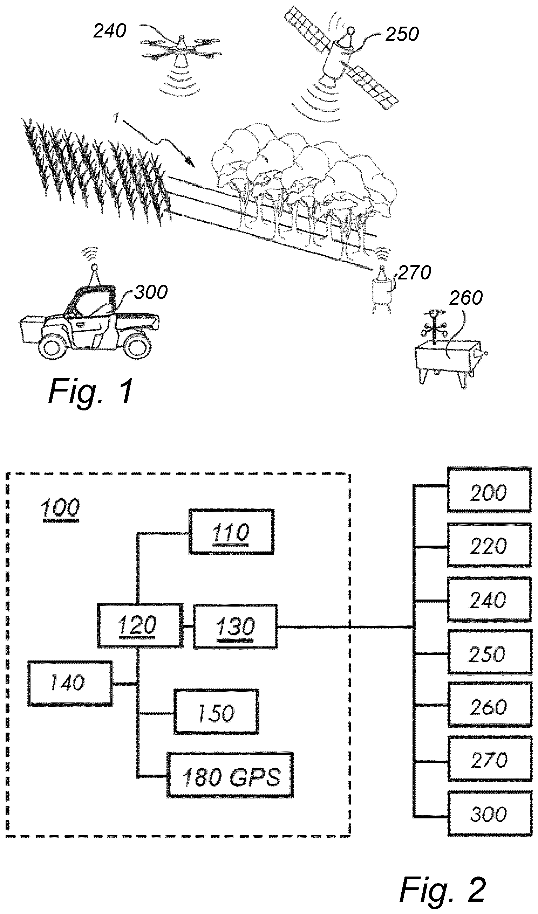

Figure 1 depicts an agricultural field comprising a crop within an agricultural region with other systems and apparatus with which the system 100 may interoperate. In Figure 2, an example of a system 100 according to the present disclosure is represented. System 100, according to the present disclosure, comprises several components such as a memory unit 110, a processor 120, a wired/wireless communication unit 130, an input/output unit 140. The system 100 may as well be operatively connected with a personal or mobile device 200 by means of the communication unit 130.

System 100 comprises an agricultural recommendation engine 220 to which the system may be remotely connected by means of the communication unit 130, may it be of a remote nature. In this case, the agricultural recommendation engine 220 may be represented by a computer, a remotely accessible server, other client-server architectures or any other electronic devices usually encompassed under the term data processing apparatus. System 100 does not need to be located within the vicinities of the agricultural field where the recommendation is supposed to take place.

System 100 can be represented as well by a laptop computer or handheld device, with an integrated agricultural recommendation engine 150 which can be fully operated at the farm's location and may comprise a GPS unit 180 or any other suitable localization means, as well as a fully remote computer or server configured to establish communication with the further personal or mobile device 200 from which the users may operate the system 100.

It is to be understood that the presence of remote and integrated recommendation engines are not mutually excluding. Integrated agricultural recommendation engine 150 can be a local copy of remote agricultural recommendation engine 220 or a light version of it to support periods of low network connectivity and offline work. Further, mobile or personal device 200 is considered to be any state-of-the-art mobile computing device which allows the input and ouput of data by the users and comprise the usual

System 100 and remote or integrated agricultural recommendation engine may comprise field and farm data and external data and/or be configured to receive said data, whereby external data comprises weather data, satellite imagery data and further data provided by weather forecast providers or other third parties. Field data may comprise amongst others current and past data of at least one of the following: field and geographic identifiers regarding the geometry of the boundaries of the agricultural field, including the presence of areas within the agricultural field which are not managed, topographic data, crop identifiers (crop variety and type, growth status, planting data and date, plant nutrition and health status) of current and past crops, harvest data (yield, value, product quality, estimated or recorded historic values), soil data (type, pH, soil organic matter (SOM) and/or cation exchange capacity, CEC). Farm data may comprise further data regarding to planned and past tasks like field maintenance practices and agricultural practices, fertilizer application data, pesticide application data, irrigation data and other field reports as well as historic series of the data, allowing the comparison of the data with past data, and the processing of further administrative data like work shifts, logs and other organizational data. Planned and past tasks may comprise further activities like surveillance of plants and pests, application of pesticides, fungicides or crop nutrition products, measurements of at least one farm or field parameter, maintenance and repair of ground hardware and other similar activities.

The system 100 may be configured to receive and/or retrieve soil data from available online soil databases like SoilGrids from the World Soil Information, SSURGO (Soil Survey Geographic Database from the United States Department of Agriculture) or any similar soil data repository, as well as by means of user input.

System 100 may be further configured to receive any of the above mentioned data and further field data from a predetermined number of locations within or nearby the analyzed region, inputted manually by the users/farmers by means of the input/output unit 140 or received by the communication unit 130 from dedicated sensors 270. Further, system 100 and agricultural recommendation engine 220 may be configured to receive weather data from nearby weather stations 260 and/or external crop/farm sensors or sensing devices 270, as well as by means of the input unit 140. Nearby weather stations 260 and/or external crop/farm sensors 270 are configured to communicate via one or more networks. In another embodiment, weather data is provided by external weather forecast companies. Weather data may further include present and past series of data of the at least one of the following: temperatures, accumulated precipitation, relative humidity, wind speed, solar radiance, accumulated sun hours, as well as forecasts, etc.

System 100 may further be operatively connected to an agricultural apparatus 300. Examples of agricultural apparatus 300 include tractors, combines, harvesters, planters, trucks, fertilizer equipment, and any other item of physical machinery or hardware, typically mobile machinery, and which may be used in tasks associated with agriculture. In one embodiment, system 100 may be configured to communicate with the agricultural apparatus 300 by means of wireless networks in order to set a variable rate application prescription for the determined crop, or alternatively, to determine the measurement region as indicated destination. System 100 may be further configured to produce a machine-readable script file for the agricultural apparatus 300 to carry out the fertilizer application.

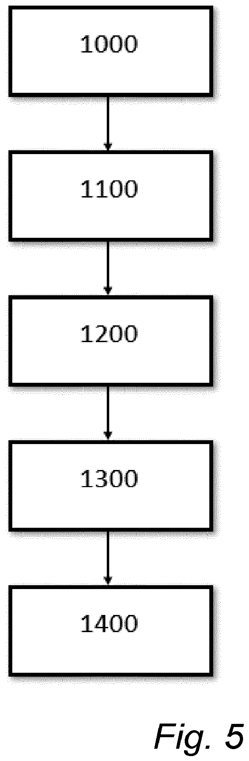

Figure 5 shows a flowchart representing the method according to the main embodiment of the present application, which will be disclosed here below.

In an embodiment, the computer implemented method of the present disclosure is configured to provide 1400 a variable site-specific fertilizer recommendation for a crop, the method comprising the steps of determining 1000 at least one agricultural field comprising at least one crop. An example of how the current method may determine at least one agricultural field may be the user providing a predetermined field, but the method of the current disclosure may be configured to automatically retrieve the field for which the recommendation is intended based on farm and/or field data. The agricultural field may be determined as well based on a position of the user, which may be given by the system 100, the mobile device 200 or by the agricultural apparatus 300. In a further embodiment, system 100 is configured to determine the boundaries of the determined agricultural field may the determined field not have data regarding the boundary locations in the existing farm data.

The method of the current disclosure is further configured to determine 1300 a crop nutrient status of the at least one agricultural field. The present application may be configured to use suitable remote data for remotely determining the crop nutrient content. Remote data can be referred to data provided by imaging satellites 250 or suitable manned or unmanned imaging aerial vehicles 240. These satellite or vehicle systems are configured to communicate by means of dedicated networks and usual methods which do not need being disclosed herein. Amongst the different remote data available for use, satellite data is nowadays widely available from numerous public (LANDSAT from NASA, SENTINEL from ESA) and/or private providers. The present method is however not limited to a satellite data platform, since the spectral bands which can be of use for the present method are provided in a big range of the standard satellite data available publicly and privately. Due to the differences present across different satellite and optical sensor platforms, it is hereby not intended to limit the support of the current disclosure to exact and specific wavelengths and the given wavelengths are provided for orientation. While different factors and corrections can be introduced to account for these variabilities, the use of wavelengths proximate to the ones mentioned below should be understood since the specifications of said platforms vary accordingly.

In an embodiment, remote data is obtained from the Sentinel-2 satellite. The Sentinel-2 mission contains a MSI (Multi Spectral Instrument) that takes high spatial resolution data in order to monitor Earth's surface. The MSI works passively, by collecting sunlight reflected from the Earth and is therefore a more efficient and less energy consuming detection method. Sentinel-2 consists of 13 bands with different spatial resolutions (10m, 20m or 60m), in the visible, near infrared, and shortwave infrared part of the spectrum. In an embodiment, the current method uses the image data related to spectral bands with at least a plurality of wavelengths comprised approximately between 700 and 850 nm. In a further embodiment, the present method uses data related to spectral bands with a wavelength of approximately 740 and 780 nm. The use of Sentinel-2 spectral bands from the MSI produces measurements with a high resolution (approx. 20 m) and is therefore preferred for the implementation of the current disclosure.

In an embodiment, remote data may comprise data relating to different spectral bands used for improving the determination of the present method. Further compensation and calibration algorithms are considered in the present application, depending on the nature and origin of the remote data.

Once the remote data has been received, the method is configured to generate at least one coefficient derived from the remote data. Different coefficients (or indexes) have been used in the literature for obtaining different agricultural information like the difference vegetation index and the normalized difference vegetation index (NDVI). However, NDVI is sensitive to the effects of soil brightness, soil color, atmosphere, clouds, cloud shadows, and leaf canopy shadows and requires remote sensing calibration. In that sense, further coefficients contemplated may comprise the Atmospherically Resistant Vegetation Index (ARVI) to reduce the dependence of atmospheric effects; the Soil-Adjusted Vegetation Index (SAVI) or the Type Soil Atmospheric Impedance Vegetation Index (TSARVI) which take into consideration the distinction of vegetation from the different types of soil background.

In one embodiment, in order to provide a reliable vegetation index or coefficient which is indicative of the above-ground nitrogen uptake present in the vegetation, at least one of the indexes of the application may include different wavelengths at the so-called red edge of vegetation between 670 and 800 nm.

For example, formulations of a vegetation index according to the present considerations can be expressed as: $SX= f(R760,R730)$, wherein R760 and R730 represent the reflectance values of the image data relating to the respective wavelengths, or values closest to them in the respective satellite platform as explained above and $f$ represents a predetermined mathematical relation of the different wavelengths according to the intended finality, as it is known in the field of agronomic remote sensing, wherein different vegetation indexes are used by suitably combining reflectance data from different suitable wavelengths. A mathematical relation $f$ is defined as the set of operations which define the respective vegetation index as it will be seen below. The present index is therefore sensitive to the chlorophyll content present in the vegetation and a direct relationship with the total amount of above-ground nitrogen uptake within the canopy can be directly derived. While for this example the data related to the respective wavelengths have been indicated as R760 and R730, this is just a non-limiting example indicating two suitable wavelengths for the determination of chlorophyll. Although for notation simplicity purposes the wavelengths will be denominated as having only 3 digits, the use of corresponding wavelengths over the value of 1000 is not excluded in the method of the current application. As such, a generic vegetation index may be indicated as any arbitrary mathematical function based on a suitable relation of data relating to specific wavelengths and can be represented by any suitable mathematical function $f$ establishing a specific relation amongst the wavelengths, which can be then generically represented as follows:

$$SX = f\left(RXXX(1), RXXX(2), \ldots, RXXX(n)\right)$$

Wherein $RXXX(i)$ represent each of the wavelengths of the image data of the plurality of wavelengths use for the determination of the respective index. Usually, at least two different wavelengths derived from the remote image data are used, but the current disclosure is not limited to a fixed number.

In a further embodiment, in order to provide a reliable vegetation index or coefficient which is indicative of the above-ground fresh or dry matter in the vegetation, the remote data may comprise a further remote data comprising further wavelengths at or close to water absorption bands, such as around 970 nm, 1100, 1450 or 1950 in order to improve the fertilizer recommendation by tailoring other parameters present in the field like the biomass amount.

The biomass determination can be independent of chlorophyll. In a further embodiment, fresh biomass can e.g. be calculated from $SW = g(R900,R970)$, wherein, as before, R900 and R970 represent the reflectance values of the image data relating to the respective wavelengths, or values closest to them in the respective satellite platform and g may represent a similar or different suitable mathematical relation of the different wavelengths. Determining the chlorophyll content, directly related to the crop nitrogen content, and the fresh biomass, a more accurate fertilizer recommendation including other elements like potassium or phosphorus can be carried out.

However, the list of coefficients (or indexes) is not meant to be limiting. There is a great variance of different coefficients which are as well able of being used by the present method, wherein the current method aims at obtaining the best advantages of each of the vegetation indexes while reducing their disadvantages by finding a suitable pair of them which improve the crop nutrient status determination over the different crop stages. For example, NDVI is very sensitive to soil and atmospheric effects which renders it noisy in early crop stages and presents high saturation levels While the NDVI might provide a good and noiseless indication of relative in-field variability at late crop stages, it does not provide a good absolute estimate of the above-ground nitrogen uptake of a crop. This and other benefits of the current approach will be made clear in view of the current disclosure.

The method of the current application is further configured to determine 1100 a baseline value for the crop nutrient status of the at least one agricultural field determined. In an embodiment, the baseline value may be determined by receiving remote data, wherein the remote data comprises image data of the at least one agricultural field. Based on the received image data, the method of the current application generates at least one vegetation index indicative of a crop nutrition status as disclosed above, wherein the method of the current application is configured to determine a crop nutrient status baseline value based on the at least one vegetation index. The baseline value is therefore defined as a constant value over the whole agricultural field, however determined taken into consideration the whole field whole crop nutrient status.

The method of the current application is further configured to determine 1200 an in-field variability for the crop nutrient status of the at least one agricultural field and based on the baseline value and on the in-field variability of the crop nutrient status of the at least one agricultural field determine 1400 a site-specific variable fertilizer recommendation 4000.

In a further embodiment, determining an in-field variability may be achieved by means of remote sensing. In this embodiment, the method of the current application is configured to receive remote data, wherein remote data comprises image data comprising reflectance values of the at least one agricultural field and generating at least one vegetation index indicative of a current crop nutrition status based on the image data, and determining the current in-field variability of the crop nutrient status based on the vegetation index.

In a further embodiment, at least one further vegetation index is determined for determining the current in-field variability based on the vegetation index used for determining the baseline value of the crop nutrient status. As mentioned above, an appropriate vegetation index may be determined as SX= f(R760,R730). In this case, a further vegetation index can be determined such that SX'= f'(R760,RXXX), wherein f' represents the same mathematical relation as for SX and RXXX is determined as explained below. While the two indexes have been given above with specific wavelengths, this is not intended to be a limiting example since any pair of defined vegetation indexes following the method explained below is expected to show the claimed advantages.

In the above case, if the vegetation index to be used was meant to be the NDVI, which formulation reads:

$$NDVI = \frac{NIR - RED}{NIR + RED}$$

wherein NIR represents the reflectance value related to the Near Infrared wavelengths and RED the reflectance measurements acquired in the red (visible spectrum), the at least one vegetation index would be construed by substituting any of the two channels by a further one related to a different wavelength as explained below but maintaining the same specific mathematical relation. In this case, as it is to be seen, the mathematical relation defining the NDVI is a set of additions/substractions and/or quotient/multiplications between individual reflectance data of the different wavelengthswhich should be maintained to exploit the advantages of the current disclosure.

As such, generalizing for an arbitrary vegetation index following the nomenclature used above for SX, a further vegetation index for the in-field variability would be expressed as follows:

$$SX' = f' \left( RXXX(1), RXXX(2), \dots RXXX(i'), \dots, RXXX(n) \right),$$

wherein, as mentioned above, f' would be the same mathematical relation as present for the at least one vegetation index SX for determining the baseline value. RXXX(i') represents at least one further reflectance data of given wavelengths, wherein the at least one RXXX(i') representing reflectance data included in the at least one vegetation index for determining the in-field variability replace each at least one of the plurality of reflectance data used for determining the baseline value and the at least one RXXX(i') represents reflectance data related to a different wavelength from the at least one wavelength replaced.

Thanks to this substitution and the definition of a suitably defined pair of vegetation indexes, where one is determined to represent a truthful absolute value of the crop nutrient status and the other to address intrinsic instrumental noise in the specific bands used, and relevant for the computation of the at least one further vegetation index due to the defined mathematical relation of the vegetation index, a more robust determination of the crop nutrient status may be achieved.

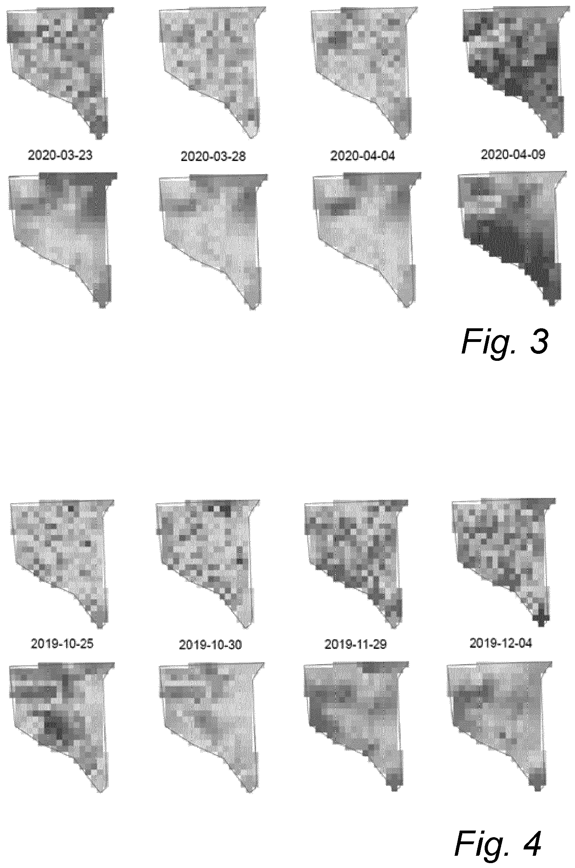

To appreciate the advantages of such a pair of vegetation indexes, figure 3 and figure 4 show examples of said suited pair of vegetation indexes SX (upper row) and the combination of SX and SX' (lower row) and the different in-field variations of each index. As it can be appreciated in both Figures, representative of different times (represented in different columns in each figure) and seasons (figure 3 shows a respective spring season and figure 4 the fall season of a given year), the upper row (SX), while a good indicator of the absolute value of the crop nutrient status, as shown in tests, shows a very noisy behavior, indicated by the granularity of the image. On the other hand, the lower row (SX') shows an in-field variability of a smoother nature and more representative of the variations present in the field as it can be appreciated, and due to the advantageous selection of the baseline value, still represents a good indicator of the absolute value.

Hence, when determining a suitable vegetation index, choices must be made regarding the sensitivity of the index relating to different crop stages and other phenomena (bare soils, linear correlation and Signal-to-Noise Ratio, SNR) while maintaining a good correlation with respect to the crop nutrient status. According to the following embodiment a truthful representation of the crop nutrient status which accounts for the absolute level of the crop nutrient status and the in-field variability can be achieved. While some vegetation indexes might have a good representation of the absolute level of the crop nutrient status or any other magnitude to be measured, this might come at the cost of showing a high noise in the determined agricultural field which impairs a reliable determination of the in-field variability. Due to the present method, a robust baseline value for the crop nutrient status is achieved, which represents a good absolute nutrient value, while the further vegetation index is suitably chosen to have a lower noise component, achieving a more robust in-field variability.

In a further embodiment, due to the advantageously established advantages for determining agricultural properties of crops, spectral bands comprising the corresponding wavelength bands related to green, red, vegetation red edge and near infrared bands are used (e.g. within the Sentinel-2 platform, this corresponds to Bands 3-8A).

In a further embodiment, the method of the current application is configured to determine which band amongst the ones generally used for agricultural purposes presents the smallest standard deviation. In case of remote satellite sensing, due to the lack of access to the instrumentation characteristics of the different satellite platforms, this can be achieved by detecting at least one area nearby the determined agricultural field of at least a predetermined size which have a flat spectral response independently from the given wavelength. For example, airport landing strips or an upper surface of dense clouds. Hence, the method of the current application is configured to determine at least one area present in the received image data which fulfill the above-mentioned conditions. Once at least one area has been determined, the current method is configured to determine the spectral band amongst the suitable bands mentioned above which presents the lowest standard deviation within that at least one area. In the case of manned or unmanned imaging aerial vehicles 240, this approach is simplified by the access to the optical sensing devices and the possible analysis thereof.

Following said determination, the further vegetation index is determined by substituting at least one of the used spectral bands of the original vegetation index by the spectral band determined to have the lowest standard deviation nearby the at least one agricultural field. While a mere substitution of at least one of the wavelengths by one of the suitable wavelengths for determining agricultural properties reduces the noise present in the vegetation index from the respective wavelengths by eliminating the existing correlation of the wavelengths as defined by the mathematical relation present in SX and de-coupling from that noise the further vegetation index SX', a further improvement can be achieved by selecting a spectral band with lower standard deviation.

Hence, in view of a defined pair of vegetation indexes SX and SX' a complete variable fertilizer recommendation taking into account a baseline value and the current in-field variability can be determined as follows:

$$N_{REC}(x, y) = F(Avg(SX) + m\ [SX'(x, y) - Avg\ (SX')]),$$

wherein in here, F represents a suitably calibrated agronomic function which transforms the crop nutrient status into a fertilizer application. F might include further terms which take into consideration soil nutrient content, soil organic matter and/or mineralization data provided by means of local analysis or present in the field data.

Hence, the variable recommendation $N_{REC}(x,y)$ may be based on the baseline value (represented in the above equation as the average of the index although a further measure of central tendency like the median or the like might be employed) of the vegetation index SX which best shows the absolute crop nutrient status and the current in-field variability representative of variations on the at least one agricultural field determined based on the vegetation index (SX') which although it might lack a truthful representation of the absolute crop nutrient status, improves the signal quality (SNR, Signal to Noise Ratio) for the in-field variability. Calibration constant m represents an optional scaling factor between *SX* and SX' which may be configured to take into consideration the different amplitudes present for different bands.

Once a precise fertilizer recommendation has been determined following the above-mentioned embodiments, the method of the current disclosure is configured in a further embodiment to produce a machine-readable script file for an agricultural apparatus to carry out the fertilizer application.

In a further embodiment, the method of the current disclosure further comprises implementing the fertilizer recommendation by means of an agricultural appliance 300, which might receive the machine-readable script by means of a physical storage device or, alternatively, by means of communicating unit 130.

Although the process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

While the use of plural nouns has been preferred throughout the disclosure when referring to persons (the users, the farmers) in order to allow a gender-neutral drafting of the text, there is hereby no limitation intended as to the number of persons which the current disclosure should be considered related to. This has been carried out in light of the amendments to the guidelines entered in force on 1st of March 2021 supporting gender-neutrality and as an example for others.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

**Claims**

1. A computer-implemented method for providing a variable fertilizer recommendation for a crop, the method comprising the steps of:

   a. determining at least one agricultural field comprising at least one crop;
   b. determining a crop nutrient status for the at least one crop in the at least one agricultural field, wherein determining a crop nutrient status for the at least one crop in the at least one agricultural field comprises:

      i. determining a baseline value for the crop nutrient status of the at least one agricultural field;
      ii. determining an in-field variability for the crop nutrient status of the at least one agricultural field;
      iii. determining the crop nutrient status based on the baseline value and on the in-field variability;

   c. determining a variable fertilizer recommendation for the at least one agricultural field based on the determined crop nutrient status.

2. A method according to claim 1, wherein determining a baseline value for the crop nutrient status comprises:

   a. receiving remote data, the remote data comprising image data of the at least one agricultural field;
   b. generating at least one vegetation index indicative of a crop nutrition status based on the image data;
   c. determining the baseline value based on the vegetation index.

3. A method according to any one of the preceding claims, wherein determining an in-field variability for the crop nutrient status comprises:

   a. receiving remote data, the remote data comprising image data of the at least one agricultural field;
   b. generating at least one vegetation index indicative of a crop nutrition status based on the image data;
   c. determining the in-field variability based on the vegetation index.

4. A method according to claim 2, wherein the at least one vegetation index for determining the baseline value is defined as

$$SX = f\left(RXXX(1), RXXX(2), \dots RXXX(i), \dots, RXXX(n)\right), \text{ wherein } RXXX(i) \text{ for } i=1,\dots,n$$

wherein $RXXX(i)$ for $i=1,\dots,n$ represent a plurality of reflectance data related to a given wavelength, comprised in the remote data, and $f$ is a predetermined mathematical relation.

5. A method according to claims 2 and 3, wherein generating at least one vegetation index based on the image data for determining an in-field variability comprises determining at least one vegetation index different from the at least one vegetation index used for determining the baseline value of the crop nutrient status.

6. A method according to claims 4, wherein the at least one vegetation index for determining an in-field variability being different from the at least one vegetation index used for determining the baseline value further comprises defining the at least one vegetation index for determining an in-field variability as $SX' = f'(RXXX(1), RXXX(2), \dots RXXX(i'), \dots, RXXX(n))$ wherein $f'$ is the same mathematical relation as present for the at least one vegetation index for determining the baseline value, wherein the at least one $RXXX(i')$ included in the at least one vegetation index for determining an in-field variability replaces at least one of the reflectance data included in the at least one vegetation index for determining the baseline value and the at least one $RXXX(i')$ represents reflectance data related to a different wavelength from the at least one reflectance data replaced.

7. A method according to claim 6, wherein $RXXX(i')$ are reflectance values selected amongst bands related to green, red, vegetation red edge and near infrared bands.

8. A method according to claim 7, wherein $RXXX(i')$ are selected by detecting at least one area nearby the determined agricultural field which have spectrally flat values independently from the given wavelength and selecting the at least one band from the green, red, vegetation red edge and near infrared bands which present the lowest standard deviation for the detected at least one area.

9. A method according to any one of the preceding claims, wherein the variable fertilization recommendation is further adjusted based on field data or local analysis of soil nutrient content, soil organic matter and/or mineralization data.

10. A method according to any one of the preceding claims, wherein the method further comprises producing a machine-readable script file based on the determined variable fertilizer recommendation for an agricultural apparatus to carry out a corresponding fertilizer application.

11. A method according to any one of the preceding claims, wherein the method further comprises implementing the variable fertilizer recommendation by means of an agricultural apparatus configured to carry out a fertilizer application.

12. A system for providing a fertilizer recommendation comprising a device configured to carry out the method according to any one of the claims 1 to 11.

13. A data processing apparatus comprising means for carrying out the method of any one of the claims 1 to 11.

14. A computer-readable storage medium comprising instructions which, when executed by a computer system, cause the computer system to carry out the method of any one of the claims 1 to 11.

15. A computer program product comprising instructions which, when the program is executed by a computer, cause the computer to carry out the method of any one of the claims 1 to 11.

Fig. 1

Fig. 2

2020-03-23     2020-03-28     2020-04-04     2020-04-09

*Fig. 3*

2019-10-25     2019-10-30     2019-11-29     2019-12-04

*Fig. 4*

1000

1100

1200

1300

1400

Fig. 5

Europäisches
Patentamt

European
Patent Office

Office européen
des brevets

# EUROPEAN SEARCH REPORT

Application Number

EP 21 20 1468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/035752 A1 (JOHNSON JEROME DALE [US]) 6 February 2014 (2014-02-06)<br>* abstract *<br>* page 1, paragraph 6 *<br>* page 4, paragraph 31-35 *<br>* page 7, paragraphs 72,73 *<br>* page 8, paragraphs 76,77,80 *<br>* page 9, paragraph 102 *<br>* claims; figures *<br>----- | 1-15 | INV.<br>A01C21/00<br>G06N20/20<br>G06Q50/02 |
| X | WO 03/009669 A1 (UNIV OKLAHOMA STATE [US]) 6 February 2003 (2003-02-06)<br>* abstract *<br>* page 2, line 19 - line 25 *<br>* page 3, line 3 - line 9 *<br>* page 3, line 30 - page 4, line 18 *<br>* page 5, line 3 - line 25 *<br>* page 9, line 10 - line 30 *<br>* page 10, line 1 - line 30 *<br>* page 11, line 1 - line 21 *<br>* page 13, line 18 - page 14, line 10 *<br>* page 15, line 16 - line 23 *<br>* claims; figures *<br>----- | 1-15 | |
| A | US 2018/060975 A1 (HASSANZADEH ANAHITA [US]) 1 March 2018 (2018-03-01)<br>* abstract *<br>* claims; figures *<br>----- | 1-15 | TECHNICAL FIELDS SEARCHED (IPC)<br><br>A01C<br>G06N<br>G06Q<br>A01B |

The present search report has been drawn up for all claims

| Place of search | Date of completion of the search | Examiner |
|---|---|---|
| The Hague | 17 March 2022 | Oltra García, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 20 1468**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-03-2022**

| Patent document cited in search report | | Publication date | Patent family member(s) | | Publication date |
|---|---|---|---|---|---|
| US 2014035752 | A1 | 06-02-2014 | US | 2014035752 A1 | 06-02-2014 |
| | | | US | 2015310721 A1 | 29-10-2015 |
| WO 03009669 | A1 | 06-02-2003 | CA | 2454891 A1 | 06-02-2003 |
| | | | EP | 1411758 A1 | 28-04-2004 |
| | | | MX | PA04000796 A | 03-12-2004 |
| | | | US | 2004231239 A1 | 25-11-2004 |
| | | | WO | 03009669 A1 | 06-02-2003 |
| US 2018060975 | A1 | 01-03-2018 | AR | 109222 A1 | 07-11-2018 |
| | | | AU | 2017316292 A1 | 14-03-2019 |
| | | | BR | 112019003795 A2 | 21-05-2019 |
| | | | CA | 3033952 A1 | 01-03-2018 |
| | | | EP | 3503709 A1 | 03-07-2019 |
| | | | US | 2018060975 A1 | 01-03-2018 |
| | | | US | 2020005402 A1 | 02-01-2020 |
| | | | WO | 2018038866 A1 | 01-03-2018 |
| | | | ZA | 201901406 B | 28-10-2020 |

EPO FORM P0459

For more details about this annex : see Official Journal of the European Patent Office, No. 12/82

**EP 4 162 784 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021027429 A1

- US 2021201024 A1